# EUROPEAN PATENT APPLICATION

(11) **EP 4 746 268 A1**
(43) Date of publication of application: **20.05.2026**
(21) Application number: 25213186.7
(22) Date of filing: 04.11.2025
(51) Int. Cl.: H02M 1/00, H02M 3/00, H02M 3/158, H02M 3/28, H02M 3/335

(54) **POWER CONVERTER, CONTROL METHOD OF POWER CONVERTER, AND ENERGY STORAGE SYSTEM**

(30) Priority: 18.11.2024 CN 202411658106
(71) Applicant: Huawei Digital Power Technologies Co., Ltd., Shenzhen 518043 (CN)
(72) Inventor: WU, Qi, Shenzhen, 518043 (CN); LI, Bin, Shenzhen, 518043 (CN); SU, Yang, Shenzhen, 518043 (CN); GUO, Haibin, Shenzhen, 518043 (CN); MENG, Yuandong, Shenzhen, 518043 (CN)
(74) Representative: Gill Jennings & Every LLP

(57) **Abstract**

Embodiments of this application disclose a power converter, a control method of the power converter, and an energy storage system, and relate to the field of energy technologies, to resolve a problem of how to reduce complexity of a control circuit of a DC-DC power conversion circuit in the power converter when the power converter includes a plurality of DC-DC power conversion circuits that are connected in series. Specifically, a controller is configured to: send a first pulse signal to control a first DC-DC power conversion circuit to work, and send a second pulse signal to control a second DC-DC power conversion circuit to work, to enable a direct current busbar to charge a battery pack, or enable a battery pack to be discharged to a direct current busbar. A duty cycle of the first pulse signal is determined based on a voltage or a current at a first end of the power converter, or a voltage or a current at a second end of the power converter. The second pulse signal has a fixed duty cycle and a fixed frequency.

## Description

### TECHNICAL FIELD

This application relates to the field of energy technologies, and in particular, to a power converter, a control method of the power converter, and an energy storage system.

### BACKGROUND

An energy storage system includes a power converter and a battery pack that is connected to one end of the power converter, and the other end of the power converter is configured to connect to a direct current busbar. The power converter is configured to: enable a voltage of the battery pack to adapt to a voltage of the direct current busbar, and control a magnitude and a direction of a current, to charge and discharge the battery pack. The power converter may be further configured to implement a function of balancing and protecting the battery pack, to improve a service life and reliability of the battery pack.

Because each type of direct current-to-direct current (direct current-to-direct current, DC-DC) power conversion circuit has its own advantage and disadvantage in terms of costs, a size, efficiency, a working range, electromagnetic interference, and the like. The power converter may include a plurality of DC-DC power conversion circuits that are of different types and that are connected in series, so that advantages of the plurality of DC-DC power conversion circuits of different types can complement each other. Alternatively, the power converter may include a plurality of DC-DC power conversion circuits that are of a same type and that are connected in series, so that a higher voltage gain can be achieved.

However, when the power converter includes a plurality of DC-DC power conversion circuits that are connected in series, voltages and currents at two ends of each DC-DC power conversion circuit are used as feedbacks and control targets to perform independent tracking, control, and protection on the DC-DC power conversion circuit. This causes high complexity of a control circuit of the DC-DC power conversion circuit in the power converter. Therefore, how to reduce complexity of the control circuit of the DC-DC power conversion circuit in the power converter becomes a problem that needs to be urgently resolved.

Embodiments of this application provide a power converter, a control method of the power converter, and an energy storage system, to resolve a problem of how to reduce complexity of a control circuit of a DC-DC power conversion circuit in the power converter when the power converter includes a plurality of DC-DC power conversion circuits that are connected in series.

To achieve the foregoing objective, the following technical solutions are used in embodiments of this application.

According to a first aspect of embodiments of this application, a power converter is provided. A first end of the power converter is configured to connect to a direct current busbar, and a second end of the power converter is configured to connect to a battery pack. The power converter includes a first DC-DC power conversion circuit, a second DC-DC power conversion circuit, and a controller. One end of the first DC-DC power conversion circuit is connected to the first end of the power converter, the other end of the first DC-DC power conversion circuit is connected to one end of the second DC-DC power conversion circuit, and the other end of the second DC-DC power conversion circuit is connected to the second end of the power converter. The controller is configured to: send a first pulse signal to control a first DC-DC power conversion circuit to work, and send a second pulse signal to control a second DC-DC power conversion circuit to work, to enable a direct current busbar to charge a battery pack, or enable a battery pack to be discharged to a direct current busbar. A duty cycle of the first pulse signal is determined based on a voltage or a current at the first end of the power converter, or a voltage or a current at the second end of the power converter. The second pulse signal has a fixed duty cycle and a fixed frequency.

Based on this solution, the duty cycle of the first pulse signal is determined based on the voltage or the current at the first end of the power converter, or the voltage or the current at the second end of the power converter. The second pulse signal has the fixed duty cycle and the fixed frequency. The controller sends the first pulse signal to perform closed-loop control on the first DC-DC power conversion circuit, and sends the second pulse signal to perform open-loop control on the second DC-DC power conversion circuit. In this way, the direct current busbar charges the battery pack, or the battery pack is discharged to the direct current busbar, while voltages and currents at two ends of each DC-DC power conversion circuit are not used as feedbacks and control targets to perform independent tracking, control, and protection on the DC-DC power conversion circuit, and a voltage detection circuit and a current detection circuit that correspond to each DC-DC power conversion circuit do not need to be disposed. This can reduce complexity of a control circuit of the DC-DC power conversion circuit in the power converter, and can reduce costs of the power converter. Then, the controller performs closed-loop control on the first DC-DC power conversion circuit by using the first pulse signal, which can control a voltage or a current of any node in a loop that includes the direct current busbar, the first DC-DC power conversion circuit, the second DC-DC power conversion circuit, and the battery pack. This can improve stability and safety of a voltage and a current in the loop from the direct current busbar to the battery pack.

With reference to the first aspect, in a possible implementation, the direct current busbar includes a positive direct current busbar and a negative direct current busbar. The first DC-DC power conversion circuit includes: a first bridge arm and a second bridge arm that are configured to be connected between the positive direct current busbar and the negative direct current busbar, and a first inductor that connects a midpoint of the first bridge arm and a midpoint of the second bridge arm. The first bridge arm includes a first switching transistor and a second switching transistor that are connected in series, and the second bridge arm includes a third switching transistor and a fourth switching transistor that are connected in series. The midpoint of the first bridge arm is a connection point between the first switching transistor and the second switching transistor, and the midpoint of the second bridge arm is a connection point between the third switching transistor and the fourth switching transistor. The second DC-DC power conversion circuit includes: a first capacitor, a third bridge arm, and a capacitor branch that are configured to be connected between the positive direct current busbar and the negative direct current busbar, where the third bridge arm includes a fifth switching transistor and a sixth switching transistor that are connected in series, and the capacitor branch includes a second capacitor and a third capacitor that are connected in series; and a primary coil of a transformer and a second inductor are connected in series and then connected between a midpoint of the third bridge arm and a midpoint of the capacitor branch, a third inductor is connected in parallel to the primary coil of the transformer, the midpoint of the third bridge arm is a connection point between the fifth switching transistor and the sixth switching transistor, and the midpoint of the capacitor branch is a connection point between the second capacitor and the third capacitor; and a fourth bridge arm and a fifth bridge arm that are configured to be connected between a positive electrode and a negative electrode of the battery pack, where the fourth bridge arm includes a seventh switching transistor and an eighth switching transistor that are connected in series, the fifth bridge arm includes a ninth switching transistor and a tenth switching transistor that are connected in series, a secondary coil of the transformer is connected between a midpoint of the fourth bridge arm and a midpoint of the fifth bridge arm, the midpoint of the fourth bridge arm is a connection point between the seventh switching transistor and the eighth switching transistor, and the midpoint of the fifth bridge arm is a connection point between the ninth switching transistor and the tenth switching transistor.

Based on this solution, the first DC-DC power conversion circuit uses a circuit topology of an H-bridge bidirectional DC-DC power conversion circuit, and the second DC-DC power conversion circuit uses a circuit topology of a bidirectional LLC DC-DC power conversion circuit. An advantage of a wide voltage adjustment range of the H-bridge bidirectional DC-DC power conversion circuit can be coupled with advantages of a high conversion ratio, high efficiency in a local working range, and isolation of the bidirectional LLC DC-DC power conversion circuit, which can improve working efficiency and a dynamic response speed of the power converter.

With reference to the first aspect, in a possible implementation, the first pulse signal is used to control the fourth switching transistor, and the second pulse signal is used to control the third bridge arm. The controller is further configured to: when the direct current busbar charges the battery pack, and a first condition, a second condition, a third condition, or a fourth condition is met, perform either of the following operations: reducing the duty cycle of the first pulse signal, and keeping the duty cycle and the frequency of the second pulse signal unchanged; or stopping sending the first pulse signal, keeping the duty cycle and the frequency of the second pulse signal unchanged, and sending a third pulse signal to control the first switching transistor. A duty cycle of the third pulse signal is determined based on the voltage or the current at the first end of the power converter, or the voltage or the current at the second end of the power converter. The first condition is that the current at the second end of the power converter is greater than a charging current threshold of the battery pack. The second condition is that the current at the first end of the power converter is greater than a discharging current threshold of the direct current busbar. The third condition is that the voltage at the first end of the power converter is less than a voltage lower limit threshold of the direct current busbar. The fourth condition is that the voltage at the second end of the power converter is greater than a voltage upper limit threshold of the battery pack.

Based on this solution, the controller generates a pulse signal to perform closed-loop control on the first DC-DC power conversion circuit, which can control the voltage or the current of any node in the loop that includes the direct current busbar, the first DC-DC power conversion circuit, the second DC-DC power conversion circuit, and the battery pack. This can improve stability and safety of the voltage and the current in the loop from the direct current busbar to the battery pack. In addition, the controller generates a pulse signal to perform open-loop control on the second DC-DC power conversion circuit, and the voltage detection circuit and the current detection circuit that correspond to the second DC-DC power conversion circuit do not need to be disposed. This can reduce complexity of the control circuit of the DC-DC power conversion circuit in the power converter, and can reduce costs of the power converter.

With reference to the first aspect, in a possible implementation, the controller is further configured to: when the direct current busbar charges the battery pack, the first condition, the second condition, the third condition, or the fourth condition is met, and a fifth condition is met, stop sending the first pulse signal and the second pulse signal, send a fourth pulse signal to control the second switching transistor or the third switching transistor, and send a fifth pulse signal to control the fourth bridge arm, to enable the battery pack to be discharged to the direct current busbar. A duty cycle of the fourth pulse signal is determined based on the voltage or the current at the first end of the power converter, or the voltage or the current at the second end of the power converter. The fifth pulse signal has a fixed duty cycle and a fixed frequency. The fifth condition is that the voltage at the first end of the power converter is less than a voltage upper limit threshold of the direct current busbar, the current at the first end of the power converter is less than or equal to an allowable discharging-to-charging current threshold of the direct current busbar, the voltage at the second end of the power converter is greater than a voltage lower limit threshold of the battery pack, and the current at the second end of the power converter is less than or equal to an allowable charging-to-discharging current threshold of the battery pack.

Based on this solution, the controller generates a pulse signal to perform closed-loop control on the first DC-DC power conversion circuit, which can control the voltage or the current of any node in the loop that includes the direct current busbar, the first DC-DC power conversion circuit, the second DC-DC power conversion circuit, and the battery pack. This can improve stability and safety of the voltage and the current in the loop from the direct current busbar to the battery pack. In addition, the controller generates a pulse signal to perform open-loop control on the second DC-DC power conversion circuit, and the voltage detection circuit and the current detection circuit that correspond to the second DC-DC power conversion circuit do not need to be disposed. This can reduce complexity of the control circuit of the DC-DC power conversion circuit in the power converter, and can reduce costs of the power converter.

With reference to the first aspect, in a possible implementation, the first pulse signal is used to control the first switching transistor, and the second pulse signal is used to control the third bridge arm. The controller is further configured to: when the direct current busbar charges the battery pack, and a first condition, a second condition, a third condition, or a fourth condition is met, perform either of the following operations: increasing the duty cycle of the first pulse signal, and keeping the duty cycle and the frequency of the second pulse signal unchanged; or stopping sending the first pulse signal, keeping the duty cycle and the frequency of the second pulse signal unchanged, and sending a third pulse signal to control the fourth switching transistor. A duty cycle of the third pulse signal is determined based on the voltage or the current at the first end of the power converter, or the voltage or the current at the second end of the power converter. The first condition is that the current at the second end of the power converter is less than a charging current threshold of the battery pack. The second condition is that the current at the first end of the power converter is less than a discharging current threshold of the direct current busbar. The third condition is that the voltage at the first end of the power converter is greater than a voltage upper limit threshold of the direct current busbar. The fourth condition is that the voltage at the second end of the power converter is less than a voltage lower limit threshold of the battery pack.

Based on this solution, the controller generates a pulse signal to perform closed-loop control on the first DC-DC power conversion circuit, which can control the voltage or the current of any node in the loop that includes the direct current busbar, the first DC-DC power conversion circuit, the second DC-DC power conversion circuit, and the battery pack. This can improve stability and safety of the voltage and the current in the loop from the direct current busbar to the battery pack. In addition, the controller generates a pulse signal to perform open-loop control on the second DC-DC power conversion circuit, and the voltage detection circuit and the current detection circuit that correspond to the second DC-DC power conversion circuit do not need to be disposed. This can reduce complexity of the control circuit of the DC-DC power conversion circuit in the power converter, and can reduce costs of the power converter.

With reference to the first aspect, in a possible implementation, the first pulse signal is used to control the second switching transistor, and the second pulse signal is used to control the fourth bridge arm. The controller is further configured to: when the battery pack is discharged to the direct current busbar, and a first condition, a second condition, a third condition, or a fourth condition is met, perform either of the following operations: reducing the duty cycle of the first pulse signal, and keeping the duty cycle and the frequency of the second pulse signal unchanged; or stopping sending the first pulse signal, keeping the duty cycle and the frequency of the second pulse signal unchanged, and sending a third pulse signal to control the third switching transistor. A duty cycle of the third pulse signal is determined based on the voltage or the current at the first end of the power converter, or the voltage or the current at the second end of the power converter. The first condition is that the current at the second end of the power converter is greater than a discharging current threshold of the battery pack. The second condition is that the current at the first end of the power converter is greater than a charging current threshold of the direct current busbar. The third condition is that the voltage at the first end of the power converter is greater than a voltage upper limit threshold of the direct current busbar. The fourth condition is that the voltage at the second end of the power converter is less than a voltage lower limit threshold of the battery pack.

Based on this solution, the controller generates a pulse signal to perform closed-loop control on the first DC-DC power conversion circuit, which can control the voltage or the current of any node in the loop that includes the direct current busbar, the first DC-DC power conversion circuit, the second DC-DC power conversion circuit, and the battery pack. This can improve stability and safety of the voltage and the current in the loop from the direct current busbar to the battery pack. In addition, the controller generates a pulse signal to perform open-loop control on the second DC-DC power conversion circuit, and the voltage detection circuit and the current detection circuit that correspond to the second DC-DC power conversion circuit do not need to be disposed. This can reduce complexity of the control circuit of the DC-DC power conversion circuit in the power converter, and can reduce costs of the power converter.

With reference to the first aspect, in a possible implementation, the controller is further configured to: when the battery pack is discharged to the direct current busbar, the first condition, the second condition, the third condition, or the fourth condition is met, and a fifth condition is met, stop sending the first pulse signal and the second pulse signal, send a fourth pulse signal to control the first switching transistor or the fourth switching transistor, and send a fifth pulse signal to control the third bridge arm, to enable the direct current busbar to charge the battery pack. A duty cycle of the fourth pulse signal is determined based on the voltage or the current at the first end of the power converter, or the voltage or the current at the second end of the power converter. The fifth pulse signal has a fixed duty cycle and a fixed frequency. The fifth condition is that the voltage at the first end of the power converter is greater than a voltage lower limit threshold of the direct current busbar, the current at the first end of the power converter is less than or equal to an allowable charging-to-discharging current threshold of the direct current busbar, the voltage at the second end of the power converter is less than a voltage upper limit threshold of the battery pack, and the current at the second end of the power converter is less than or equal to an allowable discharging-to-charging current threshold of the battery pack.

Based on this solution, the controller generates a pulse signal to perform closed-loop control on the first DC-DC power conversion circuit, which can control the voltage or the current of any node in the loop that includes the direct current busbar, the first DC-DC power conversion circuit, the second DC-DC power conversion circuit, and the battery pack. This can improve stability and safety of the voltage and the current in the loop from the direct current busbar to the battery pack. In addition, the controller generates a pulse signal to perform open-loop control on the second DC-DC power conversion circuit, and the voltage detection circuit and the current detection circuit that correspond to the second DC-DC power conversion circuit do not need to be disposed. This can reduce complexity of the control circuit of the DC-DC power conversion circuit in the power converter, and can reduce costs of the power converter.

With reference to the first aspect, in a possible implementation, the first pulse signal is used to control the third switching transistor, and the second pulse signal is used to control the fourth bridge arm. The controller is further configured to: when the battery pack is discharged to the direct current busbar, and a first condition, a second condition, a third condition, or a fourth condition is met, perform either of the following operations: increasing the duty cycle of the first pulse signal, and keeping the duty cycle and the frequency of the second pulse signal unchanged; or stopping sending the first pulse signal, keeping the duty cycle and the frequency of the second pulse signal unchanged, and sending a third pulse signal to control the second switching transistor. A duty cycle of the third pulse signal is determined based on the voltage or the current at the first end of the power converter, or the voltage or the current at the second end of the power converter. The first condition is that the current at the second end of the power converter is less than a discharging current threshold of the battery pack. The second condition is that the current at the first end of the power converter is less than a charging current threshold of the direct current busbar. The third condition is that the voltage at the first end of the power converter is less than a voltage lower limit threshold of the direct current busbar. The fourth condition is that the voltage at the second end of the power converter is greater than a voltage upper limit threshold of the battery pack.

Based on this solution, the controller generates a pulse signal to perform closed-loop control on the first DC-DC power conversion circuit, which can control the voltage or the current of any node in the loop that includes the direct current busbar, the first DC-DC power conversion circuit, the second DC-DC power conversion circuit, and the battery pack. This can improve stability and safety of the voltage and the current in the loop from the direct current busbar to the battery pack. In addition, the controller generates a pulse signal to perform open-loop control on the second DC-DC power conversion circuit, and the voltage detection circuit and the current detection circuit that correspond to the second DC-DC power conversion circuit do not need to be disposed. This can reduce complexity of the control circuit of the DC-DC power conversion circuit in the power converter, and can reduce costs of the power converter.

With reference to the first aspect, in a possible implementation, the controller is further configured to: when a voltage or a current at a connection end of the first DC-DC power conversion circuit and the second DC-DC power conversion circuit, or the voltage or the current at the second end of the power converter is greater than a first protection threshold, control the first DC-DC power conversion circuit to stop working; or when a voltage or a current at a connection end of the first DC-DC power conversion circuit and the second DC-DC power conversion circuit, or the voltage or the current at the second end of the power converter is greater than a second protection threshold, control both the first DC-DC power conversion circuit and the second DC-DC power conversion circuit to stop working. The second protection threshold is greater than the first protection threshold.

Based on this solution, when the voltage or the current at the connection end of the first DC-DC power conversion circuit and the second DC-DC power conversion circuit, or the voltage or the current at the second end of the power converter is greater than the protection threshold, the controller mainly controls the first DC-DC power conversion circuit to stop working to implement overcurrent or overvoltage protection. During hardware selection, a component with a high withstand voltage and a high withstand current is selected for the first DC-DC power conversion circuit, and a component with a low withstand voltage and a low withstand current may be selected for the second DC-DC power conversion circuit. However, it is unnecessary to select the component with the high withstand voltage and the high withstand current for both of the two DC-DC power conversion circuits. This can reduce costs of the power converter. In addition, different protection thresholds are set, and hierarchical protection is performed on the power converter at different voltage or current levels, which can improve reliability and stability of the power converter.

According to a second aspect of embodiments of this application, a control method of a power converter is provided, which is applied to the power converter. A first end of the power converter is configured to connect to a direct current busbar, and a second end of the power converter is configured to connect to a battery pack. The power converter includes a first DC-DC power conversion circuit, a second DC-DC power conversion circuit, and a controller. One end of the first DC-DC power conversion circuit is connected to the first end of the power converter, the other end of the first DC-DC power conversion circuit is connected to one end of the second DC-DC power conversion circuit, and the other end of the second DC-DC power conversion circuit is connected to the second end of the power converter. The method includes: sending a first pulse signal to control the first DC-DC power conversion circuit to work, and sending a second pulse signal to control the second DC-DC power conversion circuit to work, to enable the direct current busbar to charge the battery pack, or enable the battery pack to be discharged to the direct current busbar. A duty cycle of the first pulse signal is determined based on a voltage or a current at the first end of the power converter, or a voltage or a current at the second end of the power converter. The second pulse signal has a fixed duty cycle and a fixed frequency.

With reference to the second aspect, in a possible implementation, the method further includes: controlling, when a voltage or a current at a connection end of the first DC-DC power conversion circuit and the second DC-DC power conversion circuit, or the voltage or the current at the second end of the power converter is greater than a first protection threshold, the first DC-DC power conversion circuit to stop working; or controlling, when a voltage or a current at a connection end of the first DC-DC power conversion circuit and the second DC-DC power conversion circuit, or the voltage or the current at the second end of the power converter is greater than a second protection threshold, both the first DC-DC power conversion circuit and the second DC-DC power conversion circuit to stop working. The second protection threshold is greater than the first protection threshold.

According to a third aspect of embodiments of this application, an energy storage system is provided. The energy storage system includes a power converter and a battery pack that is connected to the power converter, and the power converter is the power converter according to the first aspect or any possible implementation of the first aspect. The power converter is configured to: perform power conversion on a voltage of the direct current busbar, to enable the direct current busbar to charge the battery pack, or perform power conversion on a voltage of the battery pack, to enable the battery pack to be discharged to the direct current busbar.

For descriptions of the second aspect and the third aspect in this application, refer to the detailed descriptions of the first aspect. In addition, for beneficial effects of the second aspect and the third aspect, refer to beneficial effect analyses of the first aspect. Details are not described herein again.

### BRIEF DESCRIPTION OF DRAWINGS

FIG. 1 is a diagram of a circuit topology in an application scenario of a power converter according to an embodiment of this application;
FIG. 2 is a diagram of a circuit topology of a power converter according to an embodiment of this application;
FIG. 3 is a diagram of a circuit topology of another power converter according to an embodiment of this application;
FIG. 4 is a diagram of a circuit topology of still another power converter according to an embodiment of this application;
FIG. 5 is a diagram of a circuit topology of yet another power converter according to an embodiment of this application;
FIG. 6 is a diagram of a circuit topology of yet another power converter according to an embodiment of this application;
FIG. 7 is a diagram of a waveform curve of an internal busbar voltage according to an embodiment of this application;
FIG. 8 is a diagram of another waveform curve of an internal busbar voltage according to an embodiment of this application;
FIG. 9 is a diagram of a curve waveform of a current of a battery pack and a waveform curve of a pulse signal according to an embodiment of this application; and
FIG. 10 is a schematic flowchart of a control method of a power converter according to an embodiment of this application.

### DESCRIPTION OF EMBODIMENTS

Making and use of embodiments are discussed in detail below. It should be appreciated, however, that many applicable inventive concepts provided in this application may be implemented in a plurality of specific environments. The discussed specific embodiments are merely used to describe specific manners to implement and use this specification and this technology, and do not limit the scope of this application.

Unless otherwise defined, all technical terms used in this specification have the same meaning as those commonly known to a person of ordinary skill in the art.

The circuits or other components may be described as or referred to as "configured to" perform one or more tasks. In this case, "configured to" is used for implying a structure by indicating that a circuit/component includes a structure (for example, a circuit system) that performs one or more tasks during operation. Therefore, even when a specified circuit/component is currently not operable (for example, not opened), the circuit/component may also be referred to as being configured to perform the task. Circuits/components used in conjunction with the "configured to" phrase include hardware, for example, a circuit for performing an operation.

The following describes the technical solutions in embodiments of this application with reference to accompanying drawings in embodiments of this application. In this application, "at least one" means one or more, and "a plurality of" means two or more. "And/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following items (pieces)" or a similar expression thereof indicates any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural. In addition, in embodiments of this application, words such as "first" and "second" do not limit a quantity or an execution sequence.

In this application, the word such as "example" or "for example" is used to represent giving an example, an illustration, or a description. Any embodiment or design scheme described as an "example" or "for example" in this application should not be explained as being more preferred or having more advantages than another embodiment or design scheme. To be precise, use of the word such as "example" or "for example" is intended to present a relative concept in a specific manner.

Before embodiments of this application are described, technical terms and background technologies in this application are first described.

DC-DC power conversion circuits may be classified into a plurality of types of DC-DC power conversion circuits based on circuit topologies, for example, an isolated type, a non-isolated type, a step-down type, a step-up type, a reverse type, a unidirectional type, and a bidirectional type. Each type of DC-DC power conversion circuit has its own advantages and disadvantages in terms of costs, size, efficiency, working range, electromagnetic interference, and the like. For example, in a DC-DC power conversion circuit of the isolated type, because a transformer is added, the DC-DC power conversion circuit of the isolated type has disadvantages of a more complex circuit topology, higher costs, and a larger size, and also has advantages of current isolation and higher safety.

In an energy storage system, a power converter may include a plurality of DC-DC power conversion circuits that are of different types and that are connected in series, so that advantages of the plurality of DC-DC power conversion circuits of different types can complement each other. Alternatively, the power converter may include a plurality of DC-DC power conversion circuits that are of a same type and that are connected in series, so that a higher voltage gain can be achieved. However, when the power converter includes a plurality of DC-DC power conversion circuits that are connected in series, voltages and currents at two ends of each DC-DC power conversion circuit are used as feedbacks and control targets to perform independent tracking, control, and protection on the DC-DC power conversion circuit. This causes high complexity of a control circuit of the DC-DC power conversion circuit in the power converter, and a high dynamic response delay of the power converter.

For example, an example in which the power converter includes a first DC-DC power conversion circuit and a second DC-DC power conversion circuit that are connected in series, the first DC-DC power conversion circuit is configured to connect to a direct current busbar, and the second DC-DC power conversion circuit is configured to connect to a battery pack is used. In a process in which the direct current busbar charges the battery pack by using the power converter, or a process in which the battery pack is discharged to the direct current busbar by using the power converter, voltages and currents at two ends of the first DC-DC power conversion circuit are used as feedbacks and control targets to perform independent tracking, control, and protection on the first DC-DC power conversion circuit, and voltages and currents at two ends of the second DC-DC power conversion circuit are used as feedbacks and control targets to perform independent tracking, control, and protection on the second DC-DC power conversion circuit. A detection circuit for detecting the voltages and the currents at the two ends of the first DC-DC power conversion circuit, and a detection circuit for detecting the voltages and the currents at the two ends of the second DC-DC power conversion circuit need to be disposed in the power converter. This causes high complexity of the control circuit in the power converter, and high costs of the power converter. In addition, because independent tracking, control, and protection are performed on the first DC-DC power conversion circuit and the second DC-DC power conversion circuit, in the process in which the direct current busbar charges the battery pack by using the power converter, a controller in the power converter needs to perform closed-loop control on the first DC-DC power conversion circuit and the second DC-DC power conversion circuit in sequence, so that the direct current busbar charges the battery pack. In the process in which the battery pack is discharged to the direct current busbar by using the power converter, the controller in the power converter needs to perform closed-loop control on the second DC-DC power conversion circuit and the first DC-DC power conversion circuit in sequence, so that the battery pack is discharged to the direct current busbar. This causes the high dynamic response delay of the power converter.

Therefore, how to reduce complexity of the control circuit of the DC-DC power conversion circuit in the power converter and reduce the dynamic response delay of the power converter becomes an urgent problem to be resolved.

In view of this, an embodiment of this application provides a power converter. A controller in the power converter sends a first pulse signal to perform closed-loop control on a first DC-DC power conversion circuit, and sends a second pulse signal to perform open-loop control on the second DC-DC power conversion circuit. In this way, the direct current busbar charges the battery pack, or the battery pack is discharged to the direct current busbar, while voltages and currents at two ends of each DC-DC power conversion circuit are not used as feedbacks and control targets to perform independent tracking, control, and protection on the DC-DC power conversion circuit. This can reduce complexity of a control circuit of the DC-DC power conversion circuit in the power converter, and can reduce the dynamic response delay of the power converter.

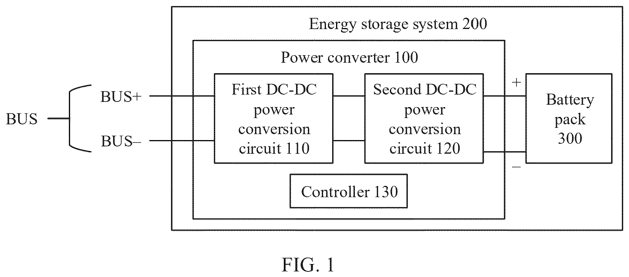

FIG. 1 is a diagram of a circuit topology in an application scenario of a power converter 100 according to an embodiment of this application. With reference to FIG. 1, the power converter 100 provided in this embodiment of this application may be used in an energy storage system 200. A first end of the power converter 100 is configured to connect to a direct current busbar BUS. The direct current busbar BUS includes a positive direct current busbar BUS+ and a negative direct current busbar BUS-. The energy storage system 200 further includes a battery pack 300 that is connected to a second end of the power converter 100. The battery pack 300 includes a positive electrode and a negative electrode.

In a possible embodiment, a type of the energy storage system 200 may include a photovoltaic energy storage system, a wind power generation energy storage system, or a power station energy storage system. This is not limited in embodiments of this application.

In a possible embodiment, the energy storage system 200 may be used in a charging station.

In a possible embodiment, the battery pack (battery pack) 300 may include at least one battery module, and each battery module may include a plurality of electrochemical cells. This is not limited in embodiments of this application.

In a possible embodiment, the power converter provided in this embodiment of this application may also be used in a photovoltaic inverter, an optimizer, or an uninterruptible power supply (uninterruptible power supply, UPS). This is not limited in embodiments of this application.

With reference to FIG. 1, the power converter 100 provided in this embodiment of this application includes a first DC-DC power conversion circuit 110, a second DC-DC power conversion circuit 120, and a controller 130. One end of the first DC-DC power conversion circuit 110 is connected to the first end of the power converter 100, the other end of the first DC-DC power conversion circuit 110 is connected to one end of the second DC-DC power conversion circuit 120, and the other end of the second DC-DC power conversion circuit 120 is connected to the second end of the power converter 100.

The controller 130 is configured to: send a first pulse signal to control the first DC-DC power conversion circuit 110 to work, and send a second pulse signal to control the second DC-DC power conversion circuit 120 to work, to enable the direct current busbar BUS to charge the battery pack 300, or enable the battery pack 300 to be discharged to the direct current busbar BUS. A duty cycle of the first pulse signal is determined based on a voltage or a current (which may also be referred to as a voltage or a current of the direct current busbar BUS) at the first end of the power converter 100, or a voltage or a current (which may also be referred to as a voltage or a current of the battery pack 300) at the second end of the power converter 100. The second pulse signal has a fixed duty cycle and a fixed frequency. Specific values of the duty cycle and the frequency of the second pulse signal are not limited in embodiments of this application. The voltage or the current at the first end of the power converter 100 is the voltage or the current of the direct current busbar BUS, and the voltage or the current at the second end of the power converter 100 is the voltage or the current of the battery pack 300.

In a possible embodiment, the first pulse signal or the second pulse signal, and pulse signals in the following embodiments include a pulse frequency modulation (pulse frequency modulation, PFM) signal or a pulse width modulation (pulse width modulation, PWM) signal. This is not limited in embodiments of this application.

It may be understood that the controller 130 sends the first pulse signal to perform closed-loop control on the first DC-DC power conversion circuit 110, and sends the second pulse signal to perform open-loop control on the second DC-DC power conversion circuit 120. In this way, the direct current busbar BUS charges the battery pack 300, or the battery pack 300 is discharged to the direct current busbar BUS, while voltages and currents at two ends of each DC-DC power conversion circuit are not used as feedbacks and control targets to perform independent tracking, control, and protection on the DC-DC power conversion circuit, and a voltage detection circuit and a current detection circuit that correspond to each DC-DC power conversion circuit do not need to be disposed. This can reduce complexity of a control circuit of the DC-DC power conversion circuit in the power converter 100, and can reduce costs of the power converter 100. Then, the controller 130 sends the first pulse signal to perform closed-loop control on the first DC-DC power conversion circuit 110, which can control a voltage or a current of any node in a loop that includes the direct current busbar BUS, the first DC-DC power conversion circuit 110, the second DC-DC power conversion circuit 120, and the battery pack 300. This can improve stability and safety of a voltage and a current in the loop from the direct current busbar BUS to the battery pack 300. Finally, compared with performing closed-loop control by the controller 130 on the second DC-DC power conversion circuit 120, the controller 130 sends the second pulse signal to perform open-loop control on the second DC-DC power conversion circuit 120, which can reduce a dynamic response delay of the power converter 100.

In a possible embodiment, the controller 130 is configured to: when the voltage (which may also be referred to as the voltage of the direct current busbar BUS) at the first end of the power converter 100 is greater than or equal to a voltage threshold of the direct current busbar, and the voltage (which may also be referred to as the voltage of the battery pack 300) at the second end of the power converter 100 is less than or equal to a voltage threshold of the battery pack, send the first pulse signal to control the first DC-DC power conversion circuit 110 to work, and send the second pulse signal to control the second DC-DC power conversion circuit 120 to work, to enable the direct current busbar BUS charges the battery pack 300. Specific values of the voltage threshold of the direct current busbar and the voltage threshold of the battery pack are not limited in embodiments of this application.

In a possible embodiment, the controller 130 is further configured to: when the voltage (which may also be referred to as the voltage of the direct current busbar BUS) at the first end of the power converter 100 is less than the voltage threshold of the direct current busbar, and the voltage (which may also be referred to as the voltage of the battery pack 300) at the second end of the power converter 100 is greater than the voltage threshold of the battery pack, send the first pulse signal to control the first DC-DC power conversion circuit 110 to work, and send the second pulse signal to control the second DC-DC power conversion circuit 120 to work, to enable the battery pack 300 to be discharged to the direct current busbar BUS.

In a possible embodiment, a type of the first DC-DC power conversion circuit 110 or a type of the second DC-DC power conversion circuit 120 includes an isolated type, a non-isolated type, a step-down type, a step-up type, a reverse type, a unidirectional type, or a bidirectional type. This is not limited in embodiments of this application. The type of the first DC-DC power conversion circuit 110 may be the same as or different from the type of the second DC-DC power conversion circuit 120. This is not limited in embodiments of this application. In the following embodiments of this application, an example in which the first DC-DC power conversion circuit 110 and the second DC-DC power conversion circuit 120 are both DC-DC power conversion circuits of the bidirectional type is used for description.

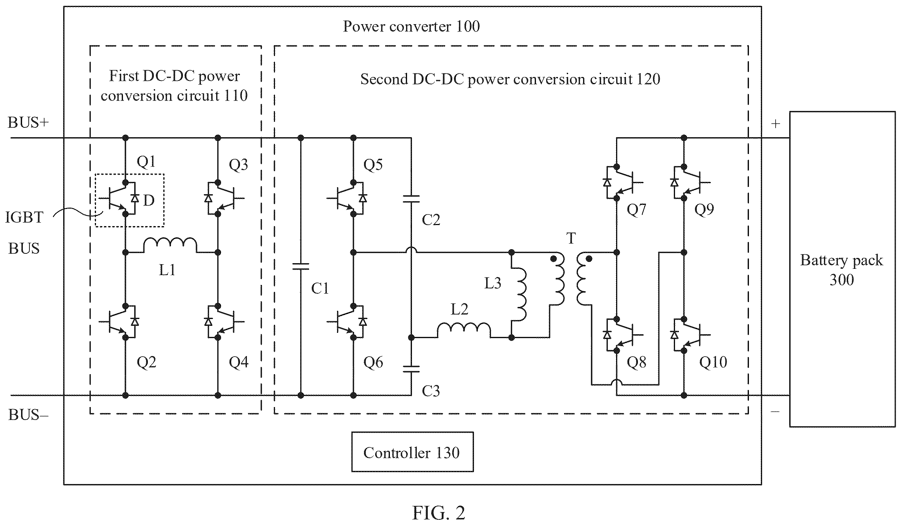

In a possible embodiment, FIG. 2 is a diagram of the circuit topology of the power converter 100 according to an embodiment of this application.

With reference to FIG. 2, the first DC-DC power conversion circuit 110 includes: a first bridge arm and a second bridge arm that are configured to be connected between the positive direct current busbar BUS+ and the negative direct current busbar BUS-, and a first inductor L1 that connects a midpoint of the first bridge arm and a midpoint of the second bridge arm. The first bridge arm includes a first switching transistor Q1 and a second switching transistor Q2 that are connected in series, and the second bridge arm includes a third switching transistor Q3 and a fourth switching transistor Q4 that are connected in series. The midpoint of the first bridge arm is a connection point between the first switching transistor Q1 and the second switching transistor Q2, and the midpoint of the second bridge arm is a connection point between the third switching transistor Q3 and the fourth switching transistor Q4. The first DC-DC power conversion circuit 110 may also be referred to as an H-bridge bidirectional DC-DC power conversion circuit.

Still with reference to FIG. 2, the second DC-DC power conversion circuit 120 includes: a first capacitor C1, a third bridge arm, and a capacitor branch that are configured to be connected between the positive direct current busbar BUS+ and the negative direct current busbar BUS-, where the third bridge arm includes a fifth switching transistor Q5 and a sixth switching transistor Q6 that are connected in series, and the capacitor branch includes a second capacitor C2 and a third capacitor C3 that are connected in series; and a primary coil of a transformer T and a second inductor L2 are connected in series and then connected between a midpoint of the third bridge arm and a midpoint of the capacitor branch, a third inductor L3 is connected in parallel to the primary coil of the transformer T, the midpoint of the third bridge arm is a connection point between the fifth switching transistor Q5 and the sixth switching transistor Q6, and the midpoint of the capacitor branch is a connection point between the second capacitor C2 and the third capacitor C3; and a fourth bridge arm and a fifth bridge arm that are configured to be connected between a positive electrode and a negative electrode of the battery pack 300, where the fourth bridge arm includes a seventh switching transistor Q7 and an eighth switching transistor Q8 that are connected in series, the fifth bridge arm includes a ninth switching transistor Q9 and a tenth switching transistor Q10 that are connected in series, a secondary coil of the transformer T is connected between a midpoint of the fourth bridge arm and a midpoint of the fifth bridge arm, the midpoint of the fourth bridge arm is a connection point between the seventh switching transistor Q7 and the eighth switching transistor Q8, and the midpoint of the fifth bridge arm is a connection point between the ninth switching transistor Q9 and the tenth switching transistor Q10. The second DC-DC power conversion circuit 120 may be referred to as a bidirectional LLC DC-DC power conversion circuit. The second capacitor C2 and the third capacitor C3 are resonant capacitors, the second inductor L2 is a resonant inductor, and the third inductor L3 is a magnetized inductor. The resonant capacitors, the resonant inductor, and the magnetized inductor form a resonant loop, and the resonant loop may also be referred to as a resonant cavity.

The H-bridge bidirectional DC-DC power conversion circuit has an advantage of a wide voltage adjustment range, and also has a disadvantage of efficiency reduced when a voltage difference is large. The bidirectional LLC DC-DC power conversion circuit has advantages of a high conversion ratio, high efficiency in a local working range, and isolation, and also has disadvantages of a fixed winding conversion ratio and a limited adjustment range. In this embodiment of this application, the first DC-DC power conversion circuit 110 uses a circuit topology of the H-bridge bidirectional DC-DC power conversion circuit, and the second DC-DC power conversion circuit 120 uses a circuit topology of the bidirectional LLC DC-DC power conversion circuit. The advantage of the wide voltage adjustment range of the H-bridge bidirectional DC-DC power conversion circuit can be coupled with the advantages of the high conversion ratio, high efficiency in the local working range, and isolation of the bidirectional LLC DC-DC power conversion circuit, which can improve working efficiency and a dynamic response speed of the power converter 100.

In a possible embodiment, the foregoing switching transistors may include a metal-oxide semiconductor field-effect transistor (metal-oxide semiconductor field-effect transistor, MOSFET). The metal-oxide semiconductor field-effect transistor may also be referred to as a MOS transistor for short, and each MOS transistor includes a reverse biased body diode. Alternatively, with reference to FIG. 2, each switching transistor may include an insulated gate bipolar transistor (insulated gate bipolar transistor, IGBT) and a diode D. A collector of the IGBT is connected to a negative electrode of the diode D, and an emitter of the IGBT is connected to a positive electrode of the diode D. For example, the first switching transistor Q1 in FIG. 2 includes the IGBT and the diode D. In the following embodiments of this application, an example in which each switching transistor includes the IGBT and the diode D is used for description.

In a possible embodiment, when the types of the first DC-DC power conversion circuit 110 and the second DC-DC power conversion circuit 120 are both DC-DC power conversion circuits of the bidirectional type, the power converter 100 may perform power conversion on the voltage of the direct current busbar BUS, to enable the direct current busbar BUS charges the battery pack 300. The power converter 100 may also perform power conversion on the voltage of the battery pack 300, to enable the battery pack 300 to be discharged to the direct current busbar BUS.

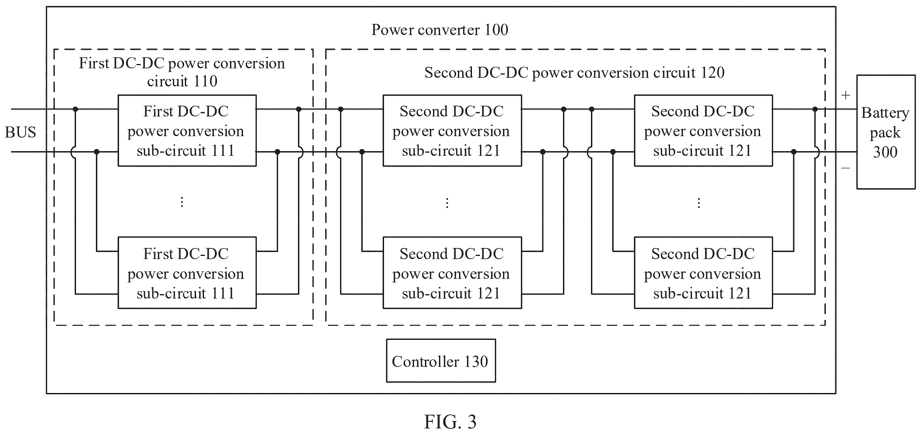

In a possible embodiment, FIG. 3 is a diagram of the circuit topology of the power converter 100 according to an embodiment of this application. With reference to FIG. 3, the first DC-DC power conversion circuit 110 may include a plurality of first DC-DC power conversion sub-circuits 111, or the second DC-DC power conversion circuit 120 may include a plurality of second DC-DC power conversion sub-circuits 121. A specific quantity of the first DC-DC power conversion sub-circuits 111 included in the first DC-DC power conversion circuit 110, and a specific quantity of second DC-DC power conversion sub-circuits 121 included in the second DC-DC power conversion circuit 120 are not limited in embodiments of this application.

In a possible embodiment, the plurality of first DC-DC power conversion sub-circuits 111 in the first DC-DC power conversion circuit 110, or the plurality of second DC-DC power conversion sub-circuits 121 in the second DC-DC power conversion circuit 120 may be connected in parallel, connected in series, or connected in series and in parallel. The connection in series and in parallel means that a part of a plurality of DC-DC power conversion sub-circuits are connected in series, and the other part of DC-DC power conversion sub-circuits are connected in parallel, or one ends of a plurality of DC-DC power conversion sub-circuits may be connected in series, and the other ends of the plurality of DC-DC power conversion sub-circuits may be connected in parallel. This is not limited in embodiments of this application.

For example, as shown in FIG. 3, the plurality of first DC-DC power conversion sub-circuits 111 in the first DC-DC power conversion circuit 110 may be connected in parallel, and the plurality of second DC-DC power conversion sub-circuits 121 in the second DC-DC power conversion circuit 120 may be connected in series and in parallel.

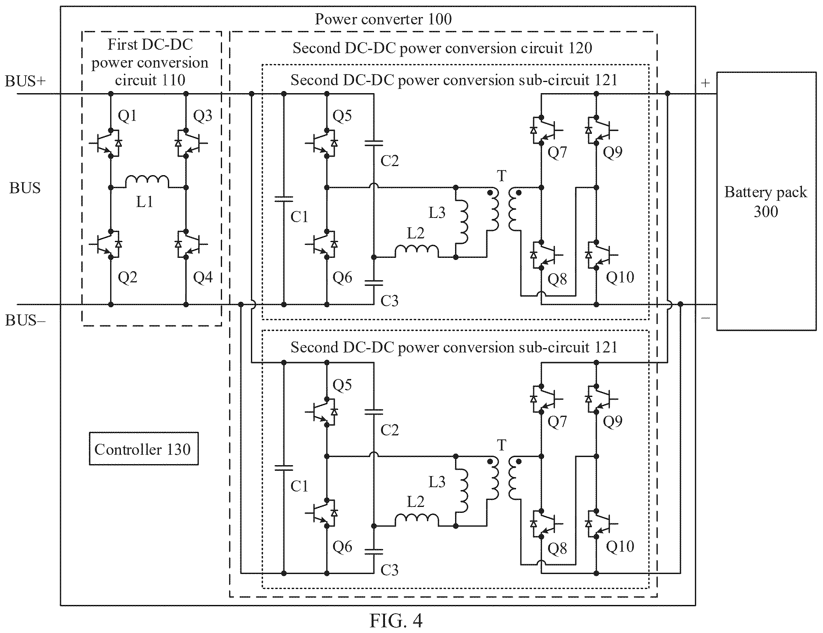

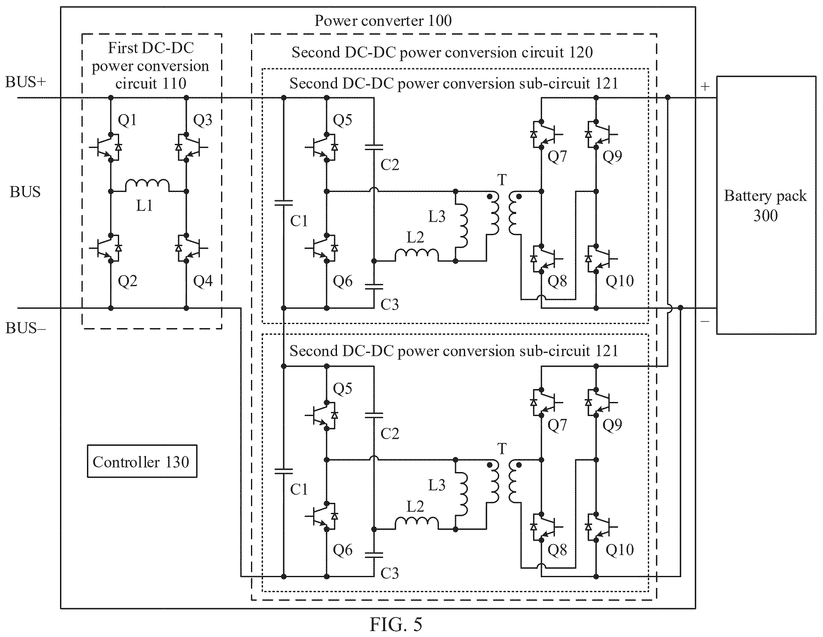

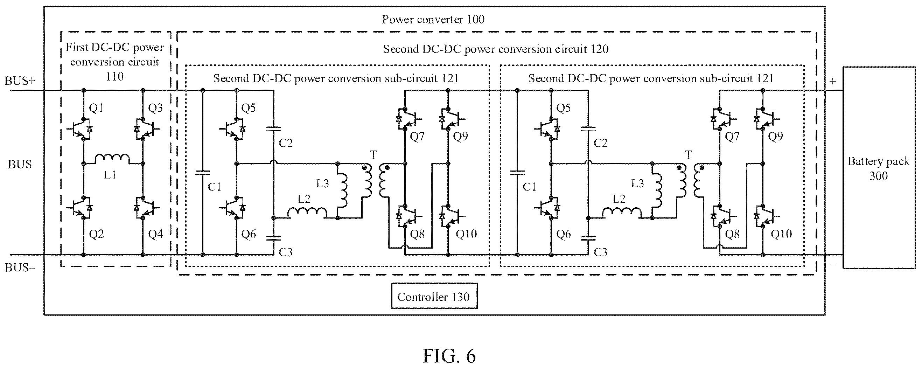

In a possible embodiment, the following example is used: The first DC-DC power conversion circuit 110 uses the circuit topology of the H-bridge bidirectional DC-DC power conversion circuit, and a circuit topology of the first DC-DC power conversion circuit 110 is the circuit topology that is of the first DC-DC power conversion circuit 110 and that is shown in FIG. 2; and the second DC-DC power conversion circuit 120 includes two second DC-DC power conversion sub-circuits 121, each second DC-DC power conversion sub-circuit 121 uses the circuit topology of the bidirectional LLC DC-DC power conversion circuit, and a circuit topology of each second DC-DC power conversion sub-circuit 121 is the circuit topology that is of the second DC-DC power conversion circuit 120 and that is shown in FIG. 2. When the two second DC-DC power conversion sub-circuits 121 are connected in parallel, the circuit topology of the power converter 100 is a circuit topology that is of the power converter 100 and that is shown in FIG. 4. When one ends of the two second DC-DC power conversion sub-circuits 121 are connected in series, and the other ends of the two second DC-DC power conversion sub-circuits 121 are connected in parallel, the circuit topology of the power converter 100 is a circuit topology that is of the power converter 100 and that is shown in FIG. 5. When the two second DC-DC power conversion sub-circuits 121 are connected in series, the circuit topology of the power converter 100 is a circuit topology that is of the power converter 100 and that is shown in FIG. 6.

In a possible embodiment, the controller 130 includes a digital signal processing (digital signal processing, DSP) chip or a microcontroller unit (microcontroller unit, MCU), and the microcontroller unit may also be referred to as a single-chip microcomputer. This is not limited in embodiments of this application.

In the power converter 100 provided in this embodiment of this application, the duty cycle of the first pulse signal is determined based on the voltage or the current at the first end of the power converter 100, or the voltage or the current at the second end of the power converter 100. The second pulse signal has a fixed duty cycle and a fixed frequency. The controller 130 sends the first pulse signal to perform closed-loop control on the first DC-DC power conversion circuit 110, and sends the second pulse signal to perform open-loop control on the second DC-DC power conversion circuit 120. In this way, the direct current busbar BUS charges the battery pack 300, or the battery pack 300 is discharged to the direct current busbar BUS, while the voltages and the currents at the two ends of each DC-DC power conversion circuit are not used as the feedbacks and the control targets to perform independent tracking, control, and protection on the DC-DC power conversion circuit, and the voltage detection circuit and the current detection circuit that correspond to each DC-DC power conversion circuit do not need to be disposed. This can reduce complexity of the control circuit of the DC-DC power conversion circuit in the power converter 100, and can reduce costs of the power converter 100. Then, the controller 130 sends the first pulse signal to perform closed-loop control on the first DC-DC power conversion circuit 110, which can control the voltage or the current of any node in the loop that includes the direct current busbar BUS, the first DC-DC power conversion circuit 110, the second DC-DC power conversion circuit 120, and the battery pack 300. This can improve stability and safety of the voltage and the current in the loop from the direct current busbar BUS to the battery pack 300. Finally, compared with performing closed-loop control by the controller 130 on the second DC-DC power conversion circuit 120, the controller 130 sends the second pulse signal to perform open-loop control on the second DC-DC power conversion circuit 120, which can reduce the dynamic response delay of the power converter 100.

In a possible embodiment, in the following embodiments of this application, an example in which the circuit topology of the power converter 100 is the circuit topology that is of the power converter 100 and that is shown in FIG. 2 is used to describe a process in which the controller 130 controls the first DC-DC power conversion circuit 110 and the second DC-DC power conversion circuit 120 by using the pulse signals, and a process of how to adjust the pulse signals to improve stability and safety of the voltage and the current in the loop from the direct current busbar BUS to the battery pack 300. When the circuit topology of the power converter 100 is the circuit topology that is of the power converter 100 and that is shown in FIG. 4, FIG. 5, or FIG. 6, refer to the descriptions provided when the circuit topology of the power converter 100 is the circuit topology that is of the power converter 100 and that is shown in FIG. 2. Details are not described in this embodiment of this application again.

With reference to FIG. 2, a direct current busbar between the first DC-DC power conversion circuit 110 and the second DC-DC power conversion circuit 120 may be referred to as an internal direct current busbar or an internal busbar, and a voltage of the internal busbar may be referred to as an internal busbar voltage.

When the direct current busbar BUS charges the battery pack 300:

In a possible embodiment, with reference to FIG. 2, the first pulse signal is used to control the fourth switching transistor Q4, so that the first DC-DC power conversion circuit 110 performs step-up power conversion on the voltage of the direct current busbar BUS to generate the internal busbar voltage. The second pulse signal is used to control the third bridge arm (the fifth switching transistor Q5 and the sixth switching transistor Q6), so that the second DC-DC power conversion circuit 120 performs power conversion on the internal busbar voltage, to enable the direct current busbar BUS to charge the battery pack 300. For specific power conversion processes, refer to the conventional technology. Details are not described herein in this embodiment of this application.

The controller 130 is further configured to: when the direct current busbar BUS charges the battery pack 300, and a first condition, a second condition, a third condition, or a fourth condition is met, perform either of the following operations: reducing the duty cycle of the first pulse signal, and keeping the duty cycle and the frequency of the second pulse signal unchanged, to reduce the internal busbar voltage; or stopping sending the first pulse signal, keeping the duty cycle and the frequency of the second pulse signal unchanged, and sending a third pulse signal to control the first switching transistor Q1, so that the first DC-DC power conversion circuit 110 performs step-down power conversion on the voltage of the direct current busbar BUS, to reduce the internal busbar voltage. In this way, a charging current of the battery pack 300 or a discharging current of the direct current busbar BUS is reduced, the voltage of the direct current busbar BUS is increased, or a voltage rise trend of the battery pack 300 is slowed down. This can improve stability and safety of the voltage and the current in the loop from the direct current busbar BUS to the battery pack 300. A duty cycle of the third pulse signal is determined based on the voltage or the current at the first end of the power converter 100, or the voltage or the current at the second end of the power converter 100. The first condition is that the current (which may also be referred to as the charging current of the battery pack 300) at the second end of the power converter 100 is greater than a charging current threshold of the battery pack 300. The second condition is that the current (which may also be referred to as the discharging current of the direct current busbar BUS) at the first end of the power converter 100 is greater than a discharging current threshold of the direct current busbar BUS. The third condition is that the voltage (which may also be referred to as the voltage of the direct current busbar BUS) at the first end of the power converter 100 is less than a voltage lower limit threshold of the direct current busbar BUS. The fourth condition is that the voltage (which may also be referred to as the voltage of the battery pack 300) at the second end of the power converter 100 is greater than a voltage upper limit threshold of the battery pack 300. The voltage lower limit threshold of the direct current busbar BUS is less than the voltage threshold of the direct current busbar, and the voltage upper limit threshold of the battery pack 300 is greater than the voltage threshold of the battery pack. Specific values of the charging current threshold of the battery pack 300, the discharging current threshold of the direct current busbar BUS, the voltage lower limit threshold of the direct current busbar BUS, and the voltage upper limit threshold of the battery pack 300 are not limited in embodiments of this application.

In a possible embodiment, for example, a case in which the current (which may also be referred to as the charging current of the battery pack 300) at the second end of the power converter 100 is greater than the charging current threshold of the battery pack 300 may be that in the following two possible embodiments, the current at the second end of the power converter 100 is greater than the charging current threshold of the battery pack 300. For a case in which the current (which may also be referred to as the discharging current of the direct current busbar BUS) at the first end of the power converter 100 is greater than the discharging current threshold of the direct current busbar BUS, or the voltage (which may also be referred to as the voltage of the direct current busbar BUS) at the first end of the power converter 100 is less than the voltage lower limit threshold of the direct current busbar BUS, or the voltage (which may also be referred to as the voltage of the battery pack 300) at the second end of the power converter 100 is greater than the voltage upper limit threshold of the battery pack 300, and other cases in the following embodiments, refer to the following descriptions. Details are not described herein in this embodiment of this application.

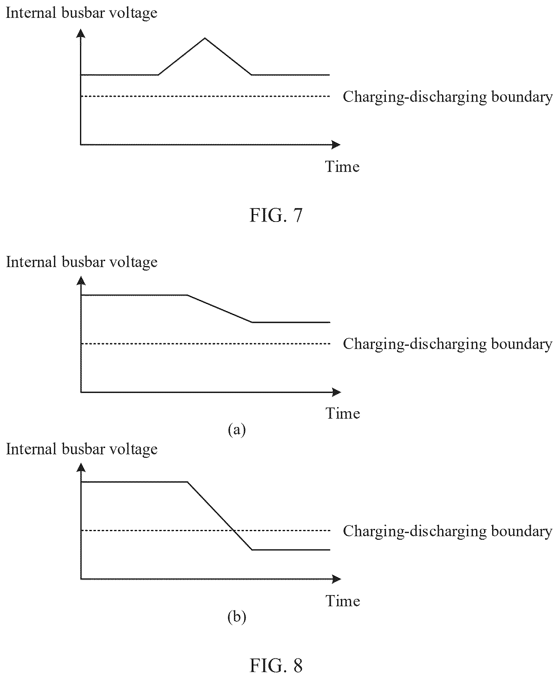

In a first possible embodiment, FIG. 7 is a diagram of a waveform curve of the internal busbar voltage. With reference to FIG. 7, when the internal busbar voltage is greater than a charging-discharging boundary, the direct current busbar BUS charges the battery pack 300; or when the internal busbar voltage is less than a charging-discharging boundary, the battery pack 300 is discharged to the direct current busbar BUS. When the voltage of the direct current busbar BUS fluctuates, the internal busbar voltage is stepped up. When the internal busbar voltage increases, the charging current of the battery pack 300 is greater than the charging current threshold of the battery pack 300. With reference to FIG. 7, the controller 130 may reduce the internal busbar voltage by reducing the duty cycle of the first pulse signal, or stop sending the first pulse signal, and send the third pulse signal to control the first switching transistor Q1. In this way, the charging current of the battery pack 300 can be restored to being equal to the charging current threshold of the battery pack 300. In this case, the internal busbar voltage is greater than the charging-discharging boundary, and the direct current busbar BUS charges the battery pack 300.

In a second possible embodiment, when the charging current threshold of the battery pack 300 is changed on an upper computer, or the controller 130 obtains a reference value as the charging current threshold of the battery pack 300, and a location at which the controller 130 obtains the reference value changes, the charging current threshold of the battery pack 300 changes, and the charging current of the battery pack 300 is greater than the charging current threshold of the battery pack 300. For example, (a) in FIG. 8 is a diagram of another waveform curve of the internal busbar voltage. When the charging current threshold of the battery pack 300 is changed on the upper computer, the charging current of the battery pack 300 is greater than the charging current threshold of the battery pack 300. In addition, the controller 130 may reduce the internal busbar voltage by reducing the duty cycle of the first pulse signal, or stop sending the first pulse signal, and send the third pulse signal to control the first switching transistor Q1. In this way, the charging current of the battery pack 300 is restored to being equal to the charging current threshold of the battery pack 300. In this case, the internal busbar voltage is greater than the charging-discharging boundary, and the direct current busbar BUS charges the battery pack 300. For another example, (b) in FIG. 8 is a diagram of still another waveform curve of the internal busbar voltage. When the charging current threshold of the battery pack 300 is changed on the upper computer, the charging current of the battery pack 300 is greater than the charging current threshold of the battery pack 300. In addition, the controller 130 may reduce the internal busbar voltage by reducing the duty cycle of the first pulse signal, or stop sending the first pulse signal, and send the third pulse signal to control the first switching transistor Q1. In this way, the charging current of the battery pack 300 is restored to being equal to the charging current threshold of the battery pack 300. In this case, the internal busbar voltage is less than the charging-discharging boundary, and the battery pack 300 is discharged to the direct current busbar BUS.

In a possible embodiment, the controller 130 is further configured to: when the direct current busbar BUS charges the battery pack 300, the first condition, the second condition, the third condition, or the fourth condition is met, and a fifth condition is met, stop sending the first pulse signal and the second pulse signal, send a fourth pulse signal to control the second switching transistor Q2 or the third switching transistor Q3, and send a fifth pulse signal to control the fourth bridge arm (the seventh switching transistor Q7 and the eighth switching transistor Q8), to enable the battery pack 300 to be discharged to the direct current busbar BUS, thereby reducing the internal busbar voltage. In this way, the charging current of the battery pack 300 or the discharging current of the direct current busbar BUS is reduced, the voltage of the direct current busbar BUS is increased, or the voltage rise trend of the battery pack 300 is reversed. This can improve stability and safety of the voltage and the current in the loop from the direct current busbar BUS to the battery pack 300. A duty cycle of the fourth pulse signal is determined based on the voltage or the current at the first end of the power converter 100, or the voltage or the current at the second end of the power converter 100. The fifth pulse signal has a fixed duty cycle and a fixed frequency. Specific values of the duty cycle and the frequency of the fifth pulse signal are not limited in embodiments of this application. The fifth condition is that the voltage (which may also be referred to as the voltage of the direct current busbar BUS) at the first end of the power converter 100 is less than a voltage upper limit threshold of the direct current busbar BUS, the current (which may also be referred to as the discharging current of the direct current busbar BUS) at the first end of the power converter 100 is less than or equal to an allowable discharging-to-charging current threshold of the direct current busbar BUS, the voltage (which may also be referred to as the voltage of the battery pack 300) at the second end of the power converter BUS is greater than a voltage lower limit threshold of the battery pack 300, and the current (which may also be referred to as the charging current of the battery pack 300) at the second end of the power converter 100 is less than or equal to an allowable charging-to-discharging current threshold of the battery pack 300. The voltage upper limit threshold of the direct current busbar BUS is greater than the voltage threshold of the direct current busbar, and the voltage lower limit threshold of the battery pack 300 is less than the voltage threshold of the battery pack. Specific values of the allowable charging-to-discharging current threshold of the battery pack 300 and the allowable discharging-to-charging current threshold of the direct current busbar BUS are not limited in embodiments of this application.

In a possible embodiment, with reference to FIG. 2, the first pulse signal is used to control the first switching transistor Q1, so that the first DC-DC power conversion circuit 110 performs step-down power conversion on the voltage of the direct current busbar BUS to generate the internal busbar voltage. The second pulse signal is used to control the third bridge arm (the fifth switching transistor Q5 and the sixth switching transistor Q6), so that the second DC-DC power conversion circuit 120 performs power conversion on the internal busbar voltage, to enable the direct current busbar BUS to charge the battery pack 300. For specific power conversion processes, refer to the conventional technology. Details are not described herein in this embodiment of this application.

The controller 130 is further configured to: when the direct current busbar BUS charges the battery pack 300, and a first condition, a second condition, a third condition, or a fourth condition is met, perform either of the following operations: increasing the duty cycle of the first pulse signal, and keeping the duty cycle and the frequency of the second pulse signal unchanged, to increase the internal busbar voltage; or stopping sending the first pulse signal, keeping the duty cycle and the frequency of the second pulse signal unchanged, and sending a third pulse signal to control the fourth switching transistor Q4, to increase the internal busbar voltage. In this way, a charging current of the battery pack 300 or a discharging current of the direct current busbar BUS is increased, the voltage of the direct current busbar BUS is reduced, or a voltage rise trend of the battery pack 300 is accelerated. This can improve stability and safety of the voltage and the current in the loop from the direct current busbar BUS to the battery pack 300. A duty cycle of the third pulse signal is determined based on the voltage or the current at the first end of the power converter 100, or the voltage or the current at the second end of the power converter 100. The first condition is that the current (which may also be referred to as the charging current of the battery pack 300) at the second end of the power converter 100 is less than a charging current threshold of the battery pack 300. The second condition is that the current (which may also be referred to as the discharging current of the direct current busbar BUS) at the first end of the power converter 100 is less than a discharging current threshold of the direct current busbar BUS. The third condition is that the voltage (the voltage of the direct current busbar BUS) at the first end of the power converter 100 is greater than a voltage upper limit threshold of the direct current busbar BUS. The fourth condition is that the voltage (the voltage of the battery pack 300) at the second end of the power converter 100 is less than a voltage lower limit threshold of the battery pack 300.

When the battery pack 300 is discharged to the direct current busbar BUS:
In a possible embodiment, with reference to FIG. 2, the second pulse signal is used to control the fourth bridge arm (the seventh switching transistor Q7 and the eighth switching transistor Q8), so that the second DC-DC power conversion circuit 120 performs conversion on the voltage of the battery pack 300, to generate the internal busbar voltage. The first pulse signal is used to control the second switching transistor Q2, so that the first DC-DC power conversion circuit 110 performs step-up power conversion on the internal busbar voltage, to enable the battery pack 300 to be discharged to direct current busbar BUS. For specific power conversion processes, refer to the conventional technology. Details are not described herein in this embodiment of this application.

The controller 130 is further configured to: when the battery pack 300 is discharged to the direct current busbar BUS, and a first condition, a second condition, a third condition, or a fourth condition is met, perform either of the following operations: reducing the duty cycle of the first pulse signal, and keeping the duty cycle and the frequency of the second pulse signal unchanged, to increase the internal busbar voltage; or stopping sending the first pulse signal, keeping the duty cycle and the frequency of the second pulse signal unchanged, and sending a third pulse signal to control the third switching transistor Q3, so that the first DC-DC power conversion circuit 110 performs step-down power conversion on the internal busbar voltage, to increase the internal busbar voltage. In this way, a discharging current of the battery pack 300, a charging current of the direct current busbar BUS, or the voltage of the direct current busbar BUS is reduced, or a voltage drop trend of the battery pack 300 is slowed down. This can improve stability and safety of the voltage and the current in the loop from the direct current busbar BUS to the battery pack 300. A duty cycle of the third pulse signal is determined based on the voltage or the current at the first end of the power converter 100, or the voltage or the current at the second end of the power converter 100. The first condition is that the current (which may also be referred to as the discharging current of the battery pack 300) at the second end of the power converter 100 is greater than a discharging current threshold of the battery pack 300. The second condition is that the current (which may also be referred to as the charging current of the direct current busbar BUS) at the first end of the power converter 100 is greater than a charging current threshold of the direct current busbar BUS. The third condition is that the voltage (which may also be referred to as the voltage of the direct current busbar BUS) at the first end of the power converter 100 is greater than a voltage upper limit threshold of the direct current busbar BUS. The fourth condition is that the voltage (which may also be referred to as the voltage of the battery pack 300) at the second end of the power converter 100 is less than a voltage lower limit threshold of the battery pack 300. Specific values of the discharging current threshold of the battery pack 300 or the charging current threshold of the direct current busbar BUS are not limited in embodiments of this application.

In a possible embodiment, the controller 130 is further configured to: when the battery pack 300 is discharged to the direct current busbar BUS, the first condition, the second condition, the third condition, or the fourth condition is met, and a fifth condition is met, stop sending the first pulse signal and the second pulse signal, send a fourth pulse signal to control the first switching transistor Q1 or the fourth switching transistor Q4, and send a fifth pulse signal to control the third bridge arm (the fifth switching transistor Q5 and the sixth switching transistor Q6), to enable the direct current busbar BUS to charge the battery pack 300, thereby increasing the internal busbar voltage. In this way, the discharging current of the battery pack 300, the charging current of the direct current busbar BUS, or the voltage of the direct current busbar BUS is reduced, or the voltage drop trend of the battery pack 300 is reversed. This can improve stability and safety of the voltage and the current in the loop from the direct current busbar BUS to the battery pack 300. A duty cycle of the fourth pulse signal is determined based on the voltage or the current at the first end of the power converter 100, or the voltage or the current at the second end of the power converter 100. The fifth pulse signal has a fixed duty cycle and a fixed frequency. Specific values of the duty cycle and the frequency of the fifth pulse signal are not limited in embodiments of this application. The fifth condition is that the voltage (which may also be referred to as the voltage of the direct current busbar BUS) at the first end of the power converter 100 is greater than a voltage lower limit threshold of the direct current busbar BUS, the current (which may also be referred to as the charging current of the direct current busbar BUS) at the first end of the power converter 100 is less than or equal to an allowable charging-to-discharging current threshold of the direct current busbar BUS, the voltage (which may also be referred to as the voltage of the battery pack 300) at the second end of the power converter 100 is less than a voltage upper limit threshold of the battery pack 300, and the current (which may also be referred to as the discharging current of the battery pack 300) at the second end of the power converter 100 is less than or equal to an allowable discharging-to-charging current threshold of the battery pack 300. Specific values of the allowable charging-to-discharging current threshold of the direct current busbar BUS and the allowable discharging-to-charging current threshold of the battery pack 300 are not limited in embodiments of this application.

In a possible embodiment, with reference to FIG. 2, the second pulse signal is used to control the seventh switching transistor Q7 and the eighth switching transistor Q8, so that the second DC-DC power conversion circuit 120 performs conversion on the voltage of the battery pack 300, to generate the internal busbar voltage. The first pulse signal is used to control the third switching transistor Q3, so that the first DC-DC power conversion circuit 110 performs step-down power conversion on the internal busbar voltage, to enable the battery pack 300 to be discharged to direct current busbar. For specific power conversion processes, refer to the conventional technology. Details are not described herein in this embodiment of this application.

The controller 130 is further configured to: when the battery pack 300 is discharged to the direct current busbar BUS, and a first condition, a second condition, a third condition, or a fourth condition is met, perform either of the following operations: increasing the duty cycle of the first pulse signal, and keeping the duty cycle and the frequency of the second pulse signal unchanged, to reduce the internal busbar voltage; or stopping sending the first pulse signal, keeping the duty cycle and the frequency of the second pulse signal unchanged, and sending a third pulse signal to control the second switching transistor Q2, so that the first DC-DC power conversion circuit 110 performs step-up power conversion on the internal busbar voltage, to reduce the internal busbar voltage. In this way, a discharging current of the battery pack 300, a charging current of the direct current busbar BUS, or the voltage of the direct current busbar BUS is increased, or a voltage drop trend of the battery pack 300 is accelerated. This can improve stability and safety of the voltage and the current in the loop from the direct current busbar BUS to the battery pack 300. A duty cycle of the third pulse signal is determined based on the voltage or the current at the first end of the power converter 100, or the voltage or the current at the second end of the power converter 100. The first condition is that the current (which may also be referred to as the discharging current of the battery pack 300) at the second end of the power converter 100 is less than a discharging current threshold of the battery pack 300. The second condition is that the current (which may also be referred to as the charging current of the direct current busbar BUS) at the first end of the power converter 100 is less than a charging current threshold of the direct current busbar BUS. The third condition is that the voltage (which may also be referred to as the voltage of the direct current busbar BUS) at the first end of the power converter 100 is less than a voltage lower limit threshold of the direct current busbar BUS. The fourth condition is that the voltage (which may also be referred to as the voltage of the battery pack 300) at the second end of the power converter 100 is greater than a voltage upper limit threshold of the battery pack 300.

According to the power converter 100 provided in this embodiment of this application, the controller 130 generates a pulse signal to perform closed-loop control on the first DC-DC power conversion circuit 110, which can control the voltage or the current of any node in the loop that includes the direct current busbar BUS, the first DC-DC power conversion circuit 110, the second DC-DC power conversion circuit 120, and the battery pack 300. This can improve stability and safety of the voltage and the current in the loop from the direct current busbar BUS to the battery pack 300. In addition, the controller 130 generates a pulse signal to perform open-loop control on the second DC-DC power conversion circuit 120, and the voltage detection circuit and the current detection circuit that correspond to the second DC-DC power conversion circuit 120 do not need to be disposed. This can reduce complexity of the control circuit of the DC-DC power conversion circuit in the power converter 100, and can reduce costs of the power converter 100.

In a possible embodiment, the controller 130 is further configured to: when a voltage or a current at a connection end of the first DC-DC power conversion circuit 110 and the second DC-DC power conversion circuit 120, or the voltage or the current at the second end of the power converter 100 is greater than a first protection threshold, control the first DC-DC power conversion circuit 110 to stop working; or control, when a voltage or a current at a connection end of the first DC-DC power conversion circuit 110 and the second DC-DC power conversion circuit 120, or the voltage or the current at the second end of the power converter 100 is greater than a second protection threshold, both the first DC-DC power conversion circuit 110 and the second DC-DC power conversion circuit 120 to stop working. The second protection threshold is greater than the first protection threshold. Specific values of the first protection threshold and the second protection threshold are not limited in embodiments of this application.

It may be understood that the controller 130 mainly controls, when the voltage or the current at the connection end of the first DC-DC power conversion circuit 110 and the second DC-DC power conversion circuit 120, or the voltage or the current at the second end of the power converter 100 is greater than the protection threshold, the first DC-DC power conversion circuit 110 to stop working to implement overcurrent or overvoltage protection. During hardware selection, a component with a high withstand voltage and a high withstand current is selected for the first DC-DC power conversion circuit 110, and a component with a low withstand voltage and a low withstand current may be selected for the second DC-DC power conversion circuit 120. However, it is unnecessary to select the component with the high withstand voltage and the high withstand current for both of the two DC-DC power conversion circuits. This can reduce costs of the power converter 100. In addition, different protection thresholds are set, and hierarchical protection is performed on the power converter 100 at different voltage or current levels, which improves reliability and stability of the power converter 100.

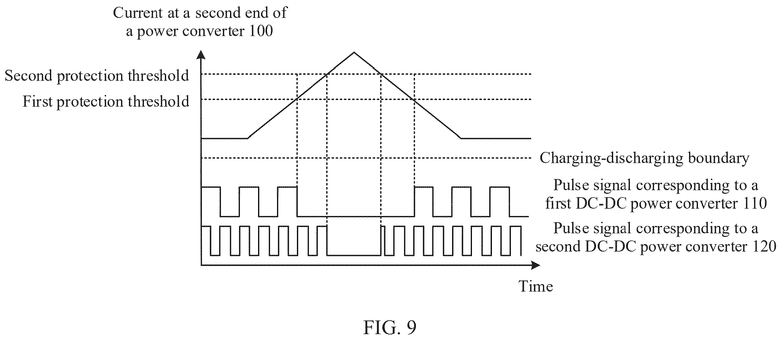

For example, FIG. 9 is a diagram of a curve waveform of the current of the battery pack 300 and a waveform curve of the pulse signal. With reference to FIG. 9, when the current (which may also be referred to as the current of the battery pack 300) at the second end of the power converter 100 is greater than the first protection threshold, the controller 130 stops sending the pulse signal to the first DC-DC power conversion circuit 110, to control the first DC-DC power conversion circuit 110 to stop working. Still with reference to FIG. 9, when the current (which may also be referred to as the current of the battery pack 300) at the second end of the power converter 100 is greater than the second protection threshold, the controller 130 stops sending the pulse signals to the first DC-DC power conversion circuit 110 and the second DC-DC power conversion circuit 120, to control both the first DC-DC power conversion circuit 110 and the second DC-DC power conversion circuit 120 to stop working.

In a possible embodiment, the controller 130 is further configured to: when a current of the resonant cavity in the second DC-DC power conversion circuit 120 is greater than the first protection threshold, control the first DC-DC power conversion circuit 110 to stop working. The controller 130 is further configured to: when the current of the resonant cavity in the second DC-DC power conversion circuit 120 is greater than the second protection threshold, control both the first DC-DC power conversion circuit 110 and the second DC-DC power conversion circuit 120 to stop working.

According to the power converter 100 provided in this embodiment of this application, the controller 130 mainly controls, when the voltage or the current at the connection end of the first DC-DC power conversion circuit 110 and the second DC-DC power conversion circuit 120, or the voltage or the current at the second end of the power converter 100 is greater than the protection threshold, the first DC-DC power conversion circuit 110 to stop working to implement overcurrent or overvoltage protection. During hardware selection, a component with a high withstand voltage and a high withstand current is selected for the first DC-DC power conversion circuit 110, and a component with a low withstand voltage and a low withstand current may be selected for the second DC-DC power conversion circuit 120. However, it is unnecessary to select the component with the high withstand voltage and the high withstand current for both of the two DC-DC power conversion circuits. This can reduce costs of the power converter 100. In addition, different protection thresholds are set, and hierarchical protection is performed on the power converter 100 at different voltage or current levels, which can improve reliability and stability of the power converter 100.

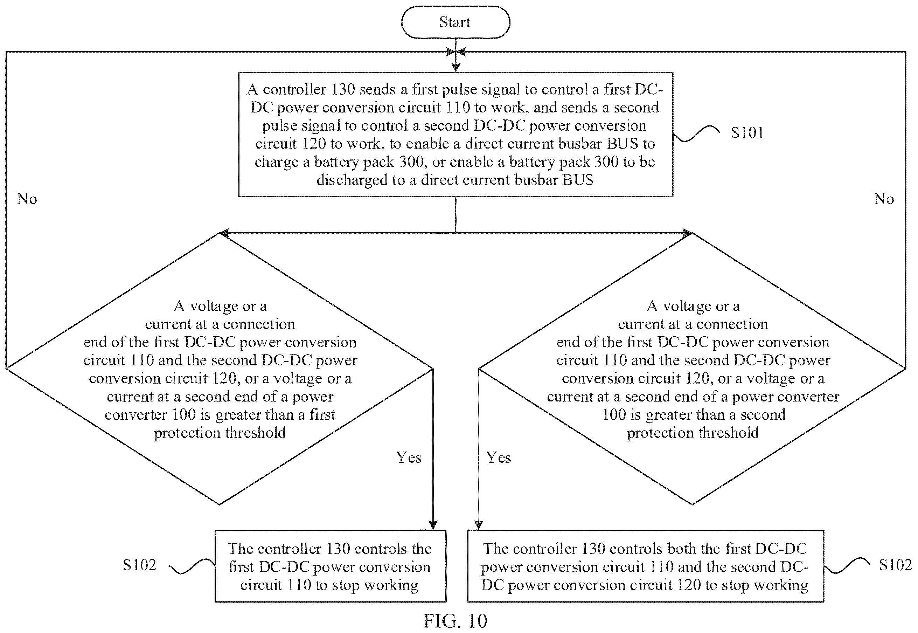

As shown in FIG. 10, an embodiment of this application further provides a control method of a power converter, applied to the foregoing power converter 100. The method includes step S101.

S101: The controller 130 sends the first pulse signal to control the first DC-DC power conversion circuit 110 to work, and sends the second pulse signal to control the second DC-DC power conversion circuit 120 to work, to enable the direct current busbar BUS to charge the battery pack 300, or enable the battery pack 300 to be discharged to the direct current busbar BUS.

The duty cycle of the first pulse signal is determined based on the voltage or the current at the first end of the power converter 100, or the voltage or the current at the second end of the power converter 100. The second pulse signal has the fixed duty cycle and the fixed frequency. Specific values of the duty cycle and the frequency of the second pulse signal are not limited in embodiments of this application.

For the process in which the controller 130 controls the first DC-DC power conversion circuit 110 and the second DC-DC power conversion circuit 120 by using the pulse signals, and the process of how to adjust the pulse signals to improve stability and safety of the voltage and the current in the loop from the direct current busbar BUS to the battery pack 300, refer to the detailed descriptions of the power converter 100. Details are not described herein in this embodiment of this application.

According to the control method of the power converter provided in this embodiment of this application, the duty cycle of the first pulse signal is determined based on the voltage or the current at the first end of the power converter 100, or the voltage or the current at the second end of the power converter 100. The second pulse signal has the fixed duty cycle and the fixed frequency. The controller 130 sends the first pulse signal to perform closed-loop control on the first DC-DC power conversion circuit 110, and sends the second pulse signal to perform open-loop control on the second DC-DC power conversion circuit 120. In this way, the direct current busbar BUS charges the battery pack 300, or the battery pack 300 is discharged to the direct current busbar BUS, while the voltages and the currents at the two ends of each DC-DC power conversion circuit are not used as the feedbacks and the control targets to perform independent tracking, control, and protection on the DC-DC power conversion circuit, and the voltage detection circuit and the current detection circuit that correspond to each DC-DC power conversion circuit do not need to be disposed. This can reduce complexity of the control circuit of the DC-DC power conversion circuit in the power converter 100, and can reduce costs of the power converter 100. Then, the controller 130 sends the first pulse signal to perform closed-loop control on the first DC-DC power conversion circuit 110, which can control the voltage or the current of any node in the loop that includes the direct current busbar BUS, the first DC-DC power conversion circuit 110, the second DC-DC power conversion circuit 120, and the battery pack 300. This can improve stability and safety of the voltage and the current in the loop from the direct current busbar BUS to the battery pack 300. Finally, compared with performing closed-loop control by the controller 130 on the second DC-DC power conversion circuit 120, the controller 130 sends the second pulse signal to perform open-loop control on the second DC-DC power conversion circuit 120, which can reduce the dynamic response delay of the power converter 100.

In a possible embodiment, as shown in FIG. 10, the control method of the power converter provided in this embodiment of this application further includes step S102. Step S102 may be performed after step S101.

S102: The controller 130 controls, when a voltage or a current at a connection end of the first DC-DC power conversion circuit 110 and the second DC-DC power conversion circuit 120, or the voltage or the current at the second end of the power converter 100 is greater than a first protection threshold, the first DC-DC power conversion circuit 110 to stop working; or controls, when a voltage or a current at a connection end of the first DC-DC power conversion circuit 110 and the second DC-DC power conversion circuit 120, or the voltage or the current at the second end of the power converter 100 is greater than a second protection threshold, both the first DC-DC power conversion circuit 110 and the second DC-DC power conversion circuit 120 to stop working.

The second protection threshold is greater than the first protection threshold. Specific values of the first protection threshold and the second protection threshold are not limited in embodiments of this application.

According to the control method of the power converter provided in this embodiment of this application, when the voltage or the current at the connection end of the first DC-DC power conversion circuit 110 and the second DC-DC power conversion circuit 120, or the voltage or the current at the second end of the power converter 100 is greater than the protection threshold, the controller 130 mainly controls the first DC-DC power conversion circuit 110 to stop working to implement overcurrent or overvoltage protection. During hardware selection, a component with a high withstand voltage and a high withstand current is selected for the first DC-DC power conversion circuit 110, and a component with a low withstand voltage and a low withstand current may be selected for the second DC-DC power conversion circuit 120. However, it is unnecessary to select the component with the high withstand voltage and the high withstand current for both of the two DC-DC power conversion circuits. This can reduce costs of the power converter 100. In addition, different protection thresholds are set, and hierarchical protection is performed on the power converter 100 at different voltage or current levels, which can improve reliability and stability of the power converter 100.

In view of this, as shown in FIG. 1, an embodiment of this application further provides the energy storage system 200. The energy storage system 200 includes the power converter 100 and the battery pack 300 that is connected to the power converter 100. The power converter 100 is further configured to connect to the direct current busbar BUS. The power converter 100 is configured to: perform power conversion on the voltage of the direct current busbar BUS, to enable the direct current busbar BUS to charge the battery pack 300, or perform power conversion on the voltage of the battery pack 300, to enable the battery pack 300 to be discharged to the direct current busbar BUS. A circuit topology of the power converter 100 is the circuit topology that is of the power converter 100 and that is shown in any one of FIG. 1 to FIG. 6.

The foregoing detailed descriptions of the power converter 100 and beneficial effect analyses may be correspondingly applied to the control method of the power converter and the energy storage system 200. Details are not described in this embodiment of this application again.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A power converter, wherein a first end of the power converter is configured to connect to a direct current busbar, a second end of the power converter is configured to connect to a battery pack, the power converter comprises a first DC-DC power conversion circuit, a second DC-DC power conversion circuit, and a controller, one end of the first DC-DC power conversion circuit is connected to the first end of the power converter, the other end of the first DC-DC power conversion circuit is connected to one end of the second DC-DC power conversion circuit, and the other end of the second DC-DC power conversion circuit is connected to the second end of the power converter;
the controller is configured to: send a first pulse signal to control the first DC-DC power conversion circuit to work, and send a second pulse signal to control the second DC-DC power conversion circuit to work, to enable the direct current busbar to charge the battery pack, or enable the battery pack to be discharged to the direct current busbar; and
a duty cycle of the first pulse signal is determined based on a voltage or a current at the first end of the power converter, or a voltage or a current at the second end of the power converter, and the second pulse signal has a fixed duty cycle and a fixed frequency.

2. The power converter according to claim 1, wherein the direct current busbar comprises a positive direct current busbar and a negative direct current busbar, and the first DC-DC power conversion circuit comprises:
a first bridge arm and a second bridge arm that are configured to be connected between the positive direct current busbar and the negative direct current busbar, and a first inductor that connects a midpoint of the first bridge arm and a midpoint of the second bridge arm, wherein the first bridge arm comprises a first switching transistor and a second switching transistor that are connected in series, the second bridge arm comprises a third switching transistor and a fourth switching transistor that are connected in series, the midpoint of the first bridge arm is a connection point between the first switching transistor and the second switching transistor, and the midpoint of the second bridge arm is a connection point between the third switching transistor and the fourth switching transistor; and
the second DC-DC power conversion circuit comprises:
a first capacitor, a third bridge arm, and a capacitor branch that are configured to be connected between the positive direct current busbar and the negative direct current busbar, wherein the third bridge arm comprises a fifth switching transistor and a sixth switching transistor that are connected in series, and the capacitor branch comprises a second capacitor and a third capacitor that are connected in series; and
a primary coil of a transformer and a second inductor are connected in series and then connected between a midpoint of the third bridge arm and a midpoint of the capacitor branch, a third inductor is connected in parallel to the primary coil of the transformer, the midpoint of the third bridge arm is a connection point between the fifth switching transistor and the sixth switching transistor, and the midpoint of the capacitor branch is a connection point between the second capacitor and the third capacitor; and
a fourth bridge arm and a fifth bridge arm that are configured to be connected between a positive electrode and a negative electrode of the battery pack, wherein the fourth bridge arm comprises a seventh switching transistor and an eighth switching transistor that are connected in series, the fifth bridge arm comprises a ninth switching transistor and a tenth switching transistor that are connected in series, a secondary coil of the transformer is connected between a midpoint of the fourth bridge arm and a midpoint of the fifth bridge arm, the midpoint of the fourth bridge arm is a connection point between the seventh switching transistor and the eighth switching transistor, and the midpoint of the fifth bridge arm is a connection point between the ninth switching transistor and the tenth switching transistor.

3. The power converter according to claim 2, wherein the first pulse signal is used to control the fourth switching transistor, and the second pulse signal is used to control the third bridge arm;
the controller is further configured to: when the direct current busbar charges the battery pack, and a first condition, a second condition, a third condition, or a fourth condition is met, perform either of the following operations:
reducing the duty cycle of the first pulse signal, and keeping the duty cycle and the frequency of the second pulse signal unchanged; or
stopping sending the first pulse signal, keeping the duty cycle and the frequency of the second pulse signal unchanged, and sending a third pulse signal to control the first switching transistor, wherein a duty cycle of the third pulse signal is determined based on the voltage or the current at the first end of the power converter, or the voltage or the current at the second end of the power converter;
the first condition is that the current at the second end of the power converter is greater than a charging current threshold of the battery pack;
the second condition is that the current at the first end of the power converter is greater than a discharging current threshold of the direct current busbar;
the third condition is that the voltage at the first end of the power converter is less than a voltage lower limit threshold of the direct current busbar; and
the fourth condition is that the voltage at the second end of the power converter is greater than a voltage upper limit threshold of the battery pack.

4. The power converter according to claim 3, wherein
the controller is further configured to: when the direct current busbar charges the battery pack, the first condition, the second condition, the third condition, or the fourth condition is met, and a fifth condition is met, stop sending the first pulse signal and the second pulse signal, send a fourth pulse signal to control the second switching transistor or the third switching transistor, and send a fifth pulse signal to control the fourth bridge arm, to enable the battery pack to be discharged to the direct current busbar, wherein a duty cycle of the fourth pulse signal is determined based on the voltage or the current at the first end of the power converter, or the voltage or the current at the second end of the power converter, and the fifth pulse signal has a fixed duty cycle and a fixed frequency; and
the fifth condition is that the voltage at the first end of the power converter is less than a voltage upper limit threshold of the direct current busbar, the current at the first end of the power converter is less than or equal to an allowable discharging-to-charging current threshold of the direct current busbar, the voltage at the second end of the power converter is greater than a voltage lower limit threshold of the battery pack, and the current at the second end of the power converter is less than or equal to an allowable charging-to-discharging current threshold of the battery pack.

5. The power converter according to claim 2, wherein the first pulse signal is used to control the first switching transistor, and the second pulse signal is used to control the third bridge arm;
the controller is further configured to: when the direct current busbar charges the battery pack, and a first condition, a second condition, a third condition, or a fourth condition is met, perform either of the following operations:
increasing the duty cycle of the first pulse signal, and keeping the duty cycle and the frequency of the second pulse signal unchanged; or
stopping sending the first pulse signal, keeping the duty cycle and the frequency of the second pulse signal unchanged, and sending a third pulse signal to control the fourth switching transistor, wherein a duty cycle of the third pulse signal is determined based on the voltage or the current at the first end of the power converter, or the voltage or the current at the second end of the power converter;
the first condition is that the current at the second end of the power converter is less than a charging current threshold of the battery pack;
the second condition is that the current at the first end of the power converter is less than a discharging current threshold of the direct current busbar;
the third condition is that the voltage at the first end of the power converter is greater than a voltage upper limit threshold of the direct current busbar; and
the fourth condition is that the voltage at the second end of the power converter is less than a voltage lower limit threshold of the battery pack.

6. The power converter according to claim 2, wherein the first pulse signal is used to control the second switching transistor, and the second pulse signal is used to control the fourth bridge arm;
the controller is further configured to: when the battery pack is discharged to the direct current busbar, and a first condition, a second condition, a third condition, or a fourth condition is met, perform either of the following operations:
reducing the duty cycle of the first pulse signal, and keeping the duty cycle and the frequency of the second pulse signal unchanged; or
stopping sending the first pulse signal, keeping the duty cycle and the frequency of the second pulse signal unchanged, and sending a third pulse signal to control the third switching transistor, wherein a duty cycle of the third pulse signal is determined based on the voltage or the current at the first end of the power converter, or the voltage or the current at the second end of the power converter;
the first condition is that the current at the second end of the power converter is greater than a discharging current threshold of the battery pack;
the second condition is that the current at the first end of the power converter is greater than a charging current threshold of the direct current busbar;
the third condition is that the voltage at the first end of the power converter is greater than a voltage upper limit threshold of the direct current busbar; and
the fourth condition is that the voltage at the second end of the power converter is less than a voltage lower limit threshold of the battery pack.

7. The power converter according to claim 6, wherein
the controller is further configured to: when the battery pack is discharged to the direct current busbar, the first condition, the second condition, the third condition, or the fourth condition is met, and a fifth condition is met, stop sending the first pulse signal and the second pulse signal, send a fourth pulse signal to control the first switching transistor or the fourth switching transistor, and send a fifth pulse signal to control the third bridge arm, to enable the direct current busbar to charge the battery pack, wherein a duty cycle of the fourth pulse signal is determined based on the voltage or the current at the first end of the power converter, or the voltage or the current at the second end of the power converter, and the fifth pulse signal has a fixed duty cycle and a fixed frequency; and
the fifth condition is that the voltage at the first end of the power converter is greater than a voltage lower limit threshold of the direct current busbar, the current at the first end of the power converter is less than or equal to an allowable charging-to-discharging current threshold of the direct current busbar, the voltage at the second end of the power converter is less than a voltage upper limit threshold of the battery pack, and the current at the second end of the power converter is less than or equal to an allowable discharging-to-charging current threshold of the battery pack.

8. The power converter according to claim 2, wherein the first pulse signal is used to control the third switching transistor, and the second pulse signal is used to control the fourth bridge arm;
the controller is further configured to: when the battery pack is discharged to the direct current busbar, and a first condition, a second condition, a third condition, or a fourth condition is met, perform either of the following operations:
increasing the duty cycle of the first pulse signal, and keeping the duty cycle and the frequency of the second pulse signal unchanged; or
stopping sending the first pulse signal, keeping the duty cycle and the frequency of the second pulse signal unchanged, and sending a third pulse signal to control the second switching transistor, wherein a duty cycle of the third pulse signal is determined based on the voltage or the current at the first end of the power converter, or the voltage or the current at the second end of the power converter;
the first condition is that the current at the second end of the power converter is less than a discharging current threshold of the battery pack;
the second condition is that the current at the first end of the power converter is less than a charging current threshold of the direct current busbar;
the third condition is that the voltage at the first end of the power converter is less than a voltage lower limit threshold of the direct current busbar; and
the fourth condition is that the voltage at the second end of the power converter is greater than a voltage upper limit threshold of the battery pack.

9. The power converter according to any one of claims 1 to 8, wherein
the controller is further configured to: when a voltage or a current at a connection end of the first DC-DC power conversion circuit and the second DC-DC power conversion circuit, or the voltage or the current at the second end of the power converter is greater than a first protection threshold, control the first DC-DC power conversion circuit to stop working; or
when a voltage or a current at a connection end of the first DC-DC power conversion circuit and the second DC-DC power conversion circuit, or the voltage or the current at the second end of the power converter is greater than a second protection threshold, control both the first DC-DC power conversion circuit and the second DC-DC power conversion circuit to stop working, wherein the second protection threshold is greater than the first protection threshold.

10. A control method of a power converter, applied to the power converter, wherein a first end of the power converter is configured to connect to a direct current busbar, a second end of the power converter is configured to connect to a battery pack, the power converter comprises a first DC-DC power conversion circuit, a second DC-DC power conversion circuit, and a controller, one end of the first DC-DC power conversion circuit is connected to the first end of the power converter, the other end of the first DC-DC power conversion circuit is connected to one end of the second DC-DC power conversion circuit, the other end of the second DC-DC power conversion circuit is connected to the second end of the power converter, and the method comprises:
sending a first pulse signal to control the first DC-DC power conversion circuit to work, and sending a second pulse signal to control the second DC-DC power conversion circuit to work, to enable the direct current busbar to charge the battery pack, or enable the battery pack to be discharged to the direct current busbar, wherein
a duty cycle of the first pulse signal is determined based on a voltage or a current at the first end of the power converter, or a voltage or a current at the second end of the power converter, and the second pulse signal has a fixed duty cycle and a fixed frequency.

11. The method according to claim 10, wherein the method further comprises:
controlling, when a voltage or a current at a connection end of the first DC-DC power conversion circuit and the second DC-DC power conversion circuit, or the voltage or the current at the second end of the power converter is greater than a first protection threshold, the first DC-DC power conversion circuit to stop working; or
controlling, when a voltage or a current at a connection end of the first DC-DC power conversion circuit and the second DC-DC power conversion circuit, or the voltage or the current at the second end of the power converter is greater than a second protection threshold, both the first DC-DC power conversion circuit and the second DC-DC power conversion circuit to stop working, wherein the second protection threshold is greater than the first protection threshold.

12. An energy storage system, wherein the energy storage system comprises the power converter according to any one of claims 1 to 9 and the battery pack that is connected to the power converter; and
the power converter is configured to: perform power conversion on a voltage of the direct current busbar, to enable the direct current busbar to charge the battery pack, or perform power conversion on a voltage of the battery pack, to enable the battery pack to be discharged to the direct current busbar.
